# EUROPEAN PATENT SPECIFICATION

(11) **EP 3 048 357 B1**
(45) Date of publication and mention of the grant of the patent: **28.03.2018**
(21) Application number: 16152482.2
(22) Date of filing: 22.01.2016
(51) Int. Cl.: F16P 3/14

(54) **MACHINE FOR MECHANICAL MACHINING**
MASCHINE FÜR MECHANISCHE BEARBEITUNG
MACHINE D'USINAGE MECHANIQUE

(30) Priority: 22.01.2015 IT MO20150007
(43) Date of publication of application: 27.07.2016
(73) Proprietor: Triveneta Impianti S.r.l., 37060 Castel d'Azzano (VR) (IT)
(72) Inventor: PASOTTO, Enrico, 37060 Castel D'Azzano (VR) (IT)
(74) Representative: Brunacci, Marco

(56) References cited:
- WO-A1-01/56720
- DE-U1-202010 017 960
- US-A1- 2003 132 371

## Description

The present invention relates to a machine for mechanical machining, such as presses, press bending machines and the like.

These machines generally comprise a bearing structure that defines a resting surface intended to support the objects to be machined, such as sheets, metal, plastic products or the like, and a work tool, such as a punch, a forming or cutting element, mobile with respect to the bearing structure towards and away from the resting surface.

As is known and easy to appreciate, the work area interposed between the tool and the resting surface is particularly dangerous for the safety of the operators working in the vicinity of the machine itself, precisely because of the presence of moving parts suitable for applying a high-intensity force.

For this reason the machines of known type are generally equipped with safety means suitable for blocking the movement of the tool following the detection of the presence of an operator in the work area.

More particularly, the safety means comprise a device for detecting the presence of an operator in the work area, such as a laser device or the like, operatively connected to an electronic control unit programmed to block the tool movement following the reception of the signal from the detection device.

In known machines, the detection device is locked together with the tool and, therefore, is also movable with respect to the bearing structure.

These machines of known type have a number of drawbacks.

In particular, the detection devices of these known machines may themselves be a source of injury for the operators.

It may happen, in fact, that in the vicinity of the machines, and in correspondence of the relevant detection device, various kinds of objects are to be found, such as boxes, barrels or the like, and that the operators charged with working on the machines themselves inadvertently use these objects as a resting base.

Following tool descent it may occur that the operator, even if he/she is located outside of the work area and therefore in the presumed safety position, be accidentally hit by the detection device.

Some machines of known type for mechanical machining with safety devices are described by US 2003/132371 and WO 01/56720.

A machine for mechanical machining according to the preamble of claim 1 is known from US 2003/132371. The main aim of the present invention is to provide a machine for mechanical machining which allows to improve, compared to the machines of known type, the operators' safety conditions.

Within this aim, one object of the present invention is to provide a machine which allows to limit the risk, compared to the machines of known type, that the relevant detection device can accidentally bump or crush the hand of an operator following the descent of the work tool.

Another object of the present invention is to provide a machine for mechanical machining which allows to overcome the mentioned drawbacks of the prior art within the ambit of a simple, rational, easy and effective to use as well as affordable solution.

The above mentioned objects are achieved by the present machine for mechanical machining.

Other characteristics and advantages of the present invention will become better evident from the description of a preferred, but not exclusive, embodiment of a machine for mechanical machining, illustrated by way of an indicative, but nonlimiting, example in the accompanying drawings, wherein:
Figure 1 is an axonometric view of a machine for mechanical machining according to the invention;
Figure 2 is an enlarged view of the safety means of the machine of Figure 1 with the protection element in the idle configuration;
Figure 3 is an enlarged view of the safety means of the machine of Figure 1 with the protection element in the lifted configuration.

With particular reference to such illustrations, reference numeral 1 globally indicates a machine for mechanical machining, e.g., a press, a press bending machine or the like.

The machine 1 comprises a bearing structure 2, which has a resting surface 3 intended to support an object to be machined and at least a tool 4 associated movable with the bearing structure 2 close to / away from the resting surface 3. The machine 1 comprises, therefore, movement means of the tool 4.

More particularly, the tool 4 is movable vertically in translation.

As is known to the technician in the sector, the tool 4 can, e.g., be of the type of a punch for bending the sheet metal or of a forming element adapted therefore to give a particular conformation to the object to be machined, or even of the type of a cutting blade.

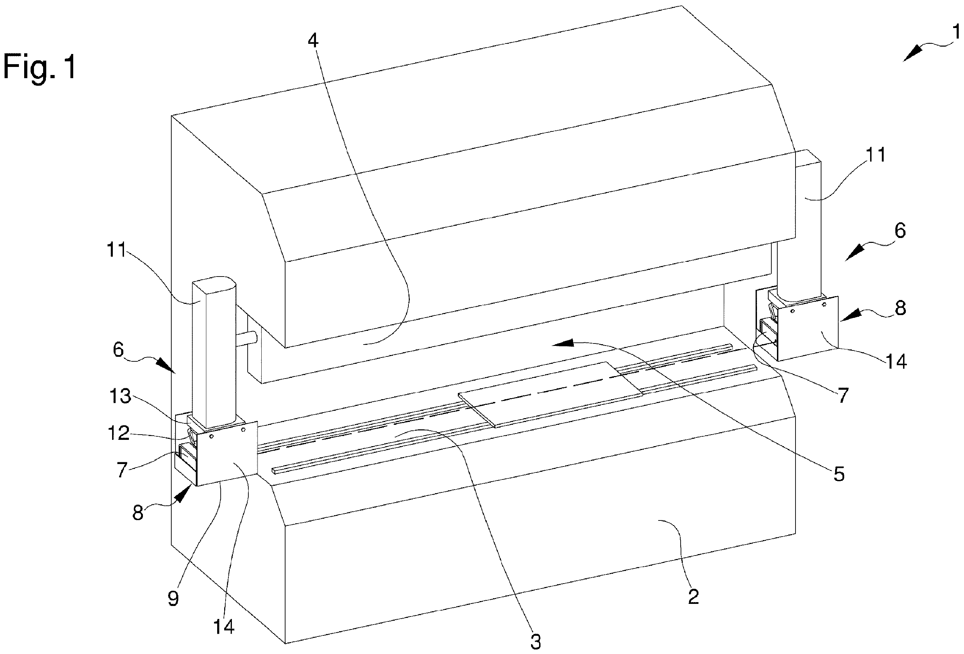

Between the resting surface 3 and the tool 4 is therefore defined a work area 5, identified in Figure 1 with reference numeral 5, inside which the object to be machined is located.

The machine 1 also comprises safety means 6 adapted to block the movement of the tool 4 following the detection of the presence of an operator in the work area 5.

More in detail, the safety means 6 comprise at least a detection device 7 for detecting the presence of an operator in the work area 5.

The detection device 7, e.g. of the laser type, is adapted to emit a light beam and the safety means 6 are able to block the movement of the tool 4 following the interruption of the light beam emitted by the detection device itself.

More particularly, the safety means 6 comprise at least one electronic control unit, not shown in the illustrations, operatively connected to the detection device 7 and to the movement means of the tool 4. The electronic control unit is therefore able to intervene on the movement means of the tool 4, in order to block the movement of the latter, following the reception of the signal emitted by the detection device 7 in the event of interruption of the light beam emitted by same, e.g. due to the presence of the operator in the work area 5.

The detection device 7 is locked together with the tool 4.

The detection device 7 therefore also moves vertically in translation together with the tool 4.

According to the invention, the safety means 6 comprise at least a protection element 8 associated in a sliding manner with the detection device 7 and defining at least one abutting surface 9 arranged below the detection device itself.

The abutting surface 9 is thus movable with respect to the detection device 7 in such a way that, following the accidental contact with an operator, the protection element 8 is lifted with respect to the detection device 7 and the operator can thus notice the descent of the detection device itself and place him/herself in a safe condition.

Advantageously, the abutting surface 9 is movable between at least an idle configuration, wherein it is spaced away from the detection device 7, and an active configuration, wherein it is lifted with respect to the idle configuration. More in particular, the idle configuration and the active configuration correspond to the end-of-stroke positions of the protection element 8, the abutting surface 9 of which is located at the maximum distance from the detection device 7 in the idle configuration and contacts the latter in the active configuration. In the transition from the idle configuration to the active one, the abutting surface 9 passes through a plurality of intermediate configurations.

Conveniently, the protection element 8 moves continuously.

The protection element 8 also defines at least a stop surface 10 arranged above the detection device 7 and adapted to contact the latter in the idle configuration. The abutting surface 9 and the stop surface 10 are then arranged on opposite sides of the detection device 7 and facing one another.

The idle configuration and the active configuration, corresponding to the end-of-stroke positions of the protection element 8, are therefore defined by the contact with the detection device 7 of the stop surface 10 and of the abutting surface 9, respectively.

Advantageously, the protection element 8 comprises at least a barrier element 15 adapted to allow and interrupt the passage of the light beam in the idle configuration and following the displacement from the idle configuration to the active configuration, respectively.

More in detail, in the embodiment shown in the figures, the barrier element 15 starts from the abutting surface 9 and extends transversely to it.

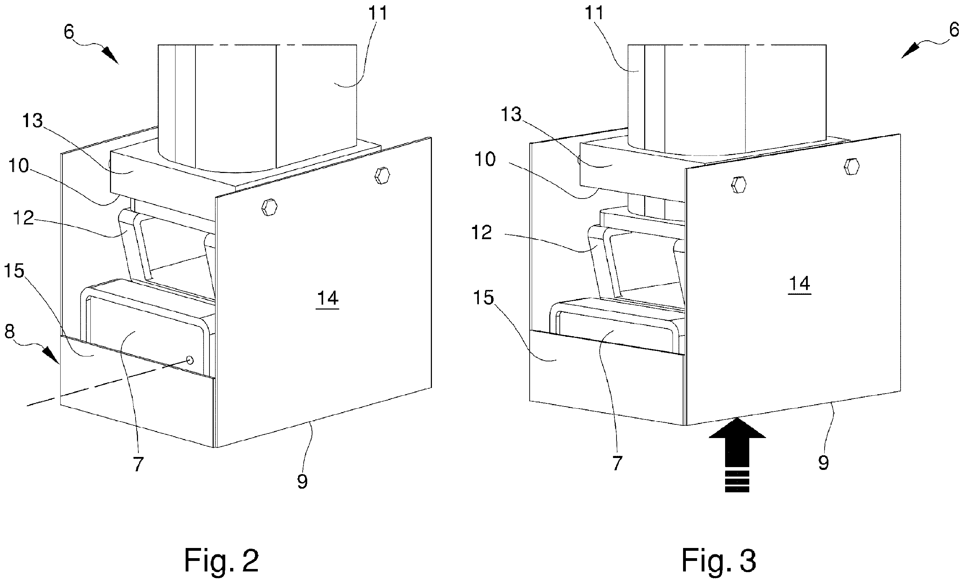

It follows, therefore, that in the idle configuration (figure 2) the barrier element 15 is offset, i.e., it is located at a lower level with respect to the source of the light beam, while following the lifting of the protection element 8 (figure 3) and therefore of its displacement towards the active configuration, e.g. as a result of the contact with the operator, the barrier element 15 takes up a position facing the source of the light beam, interrupting it and thus causing the interruption of the movement of the tool 4.

The barrier element 15 allows thereby to further increase the safety conditions of the machine 1, since it causes the block of the tool 4 following the contact of the protection element 8 with the operator.

Preferably, the safety means 6 comprise at least a supporting element 11 of the detection device 7 such as, e.g. an upright locked together with the tool 4 and having a substantially vertical extension.

As can be seen from the figures, the detection device 7 is locked together with one end of the upright 11. More in detail, the detection device 7 comprises a connecting element 12 connecting to the lower end of the upright 11 and against which the stop surface 10 rests in the idle configuration of the protection element 8.

The protection element 8 is suitably associated in a sliding manner with the supporting element 11.

More particularly, the protection element 8 is fitted sliding onto the upright 11. In the particular embodiment shown in the illustrations, the protection element 8 comprises at least a guide element 13 fitted sliding on the upright 11. As visible in detail in Figures 2 and 3, the guide element 13 has a through hole inside which is inserted the upright 11.

Conveniently, the guide element 13 defines the stop surface 10.

Preferably, the protection element 8 comprises at least one pair of side walls 14 arranged on opposite sides of the detection device 7 and placed between the abutting surface 9 and the stop surface 10.

In the particular embodiment shown in the figures, the protection element 8 therefore has a substantially box-shaped conformation.

More in detail, in the embodiment represented in the figures, the barrier element 15 is placed between the side walls 14.

The operation of the present invention is as follows.

During normal operation of the machine 1, the tool 4 moves towards and away from the resting surface 3 so as to machine the object arranged in the work area 5.

As described above, at the same time as the tool 4, the safety means 6 and, more particularly, the detection device 7 will also move.

The detection device 7 emits a light beam that passes through the work area 5 so as to detect the possible presence of the operator and, if so, emits a signal which causes the interruption of the movement of the tool 4.

Whenever an operator has inadvertently left his/her hand below the detection device 7 and, more particularly, in correspondence of the position occupied by the same following the descent of the tool 4, the protection element 8 of the present invention prevents the operator being crushed by the detection device itself.

More in detail, following the drop of the detection device 7, the operator first of all contacts the abutting surface 9 which, by effect of the interaction with the operator him/herself, moves upwards with respect to the detection device 7.

It follows, therefore, that the displacement of the protection element 8 due to the contact of the abutting surface 9 with the operator enables the latter to notice the descent of the detection device 7 at the same time without being crushed by it. Furthermore, as a result of contact with the operator and, therefore, of the lifting of the protection element 8, the barrier element 15 arranges itself substantially facing the source of the light beam emitted by the detection device 7, interrupting it and consequently causing the blocking of the tool 4.

After the operator has moved and the abutting surface 9 is free, the protection element 8 returns to its idle configuration by effect of its own weight.

It has in practice been ascertained how the described invention achieves the proposed objects and in particular the fact is underlined that the machine for mechanical machining forming the subject of the present invention, thanks to the presence of the protection element, permits avoiding the occurrence of accidents due to accidental contact between the detection device and the operator.

In particular, the presence of the protection element permits avoiding the thrust of the detection element discharging on the operator and, at the same time, gives the latter the time to place him/herself in safe condition.

Furthermore, the barrier element ensures that as a result of the contact of the protection element with the operator, the tool stops its movement, thus allowing the operator him/herself to place him/herself in conditions of safety without any risk for his/her safety.

## Claims

1. Machine (1) for mechanical machining, comprising:
- a bearing structure (2) which has at least a resting surface (3) on which at least one object to be machined can be positioned;
- at least a tool (4) associated movable with said bearing structure (2) close to / away from said resting surface (3), between said tool (4) and said resting surface (3) being defined a work area (5);
- safety means (6) comprising a detection device (7) for detecting the presence of an operator in said work area (5), said detection device (7) being adapted to emit a light beam and locked together with said tool (4); wherein said safety means (6) comprise at least a protection element (8) associated in a sliding manner with said detection device (7) and defining at least an abutting surface (9) arranged below it and movable between at least an idle configuration, wherein it is spaced away from said detection device (7), and at least an active configuration, wherein it is lifted with respect to the idle configuration; wherein said detection device (7) is adapted to emit a light beam, said safety means (6) being adapted to block the movement of said tool (4) as a result of the interruption of the light beam emitted by said detection device (7), **characterized by** the fact that said protection element (8) comprises at least a barrier element (15) adapted to allow and interrupt the passage of the light beam in said idle configuration and in the displacement from the idle configuration to the active configuration, respectively.

2. Machine (1) according to claim 1, **characterized by** the fact that said protection element (8) defines at least a stop surface (10) arranged above said detection device (7) and adapted to contact the latter in the idle configuration.

3. Machine (1) according to claim 1 or 2, **characterized by** the fact that said barrier element (15) extends starting from said abutting surface (9), transversely to it.

4. Machine (1) according to one or more of the preceding claims, **characterized by** the fact that said safety means (6) comprise at least a supporting element (11) of said detection device (7) and by the fact that said protection element (8) is associated sliding with said supporting element (11).

5. Machine (1) according to claim 4, **characterized by** the fact that said protection element (8) comprises at least a guide element (13) fitted sliding on said supporting element (11).

6. Machine (1) according to claim 5, **characterized by** the fact that said guide element (13) defines said stop surface (10).

7. Machine (1) according to one or more of the preceding claims, **characterized by** the fact that said protection element (8) comprises at least one pair of side walls (14) arranged on opposite sides of said detection device (7) and placed between said abutting surface (9) and said stop surface (10).

## Patentansprüche

1. Maschine (1) zum mechanischen Bearbeiten, umfassend:
- eine Tragstruktur (2), die mindestens eine Auflagefläche (3) hat, auf der mindestens ein Objekt, das zu bearbeiten ist, positioniert sein kann,
- mindestens ein Werkzeug (4), das hin zu / weg von der Auflagefläche (3) bewegbar mit der Tragstruktur (2) verbunden ist, wobei zwischen dem Werkzeug (4) und der Auflagefläche (3) ein Arbeitsbereich (5) definiert ist,
- Sicherheitsmittel (6), die eine Erfassungsvorrichtung (7) zum Erfassen der Anwesenheit eines Bedieners in dem Arbeitsbereich (5) umfassen, wobei die Erfassungsvorrichtung (7) eingerichtet ist, um einen Lichtstrahl auszugeben, und mit dem Werkzeug (4) zusammen verriegelt ist, wobei die Sicherheitsmittel (6) mindestens ein Schutzelement (8) umfassen, das in einer verschiebbaren Weise mit der Erfassungsvorrichtung (7) verbunden ist und mindestens eine Anschlagfläche (9) definiert, die unter ihm angeordnet ist, und zwischen mindestens einer Leerlaufkonfiguration, in der es von der Erfassungsvorrichtung (7) weg beabstandet ist, und mindestens einer aktiven Konfiguration, in der es in Bezug auf die Leerlaufkonfiguration angehoben ist, bewegbar ist,
wobei die Erfassungsvorrichtung (7) eingerichtet ist, um einen Lichtstrahl auszugeben, wobei die Sicherheitsmittel (6) eingerichtet sind, um die Bewegung des Werkzeugs (4) infolge der Unterbrechung des Lichtstrahls, der durch die Erfassungsvorrichtung (7) ausgegeben wird, zu blockieren, **gekennzeichnet durch** die Tatsache, dass das Schutzelement (8) mindestens ein Sperrelement (15) umfasst, das eingerichtet ist, um den Durchgang des Lichtstrahls jeweils in der Leerlaufkonfiguration und bei der Verschiebung von der Leerlaufkonfiguration zu der aktiven Konfiguration zu erlauben und zu unterbrechen.

2. Maschine (1) nach Anspruch 1, **gekennzeichnet durch** die Tatsache, dass das Schutzelement (8) mindestens eine Stoppfläche (10) definiert, die über der Erfassungsvorrichtung (7) angeordnet und eingerichtet ist, um die Letztere in der Leerlaufkonfiguration zu berühren.

3. Maschine (1) nach Anspruch 1 oder 2, **gekennzeichnet durch** die Tatsache, dass sich das Sperrelement (15) beginnend bei der Anschlagfläche (9) quer zu ihr erstreckt.

4. Maschine (1) nach einem oder mehreren der vorhergehenden Ansprüche, **gekennzeichnet durch** die Tatsache, dass die Sicherheitsmittel (6) mindestens ein Stützelement (11) der Erfassungsvorrichtung (7) umfassen, und durch die Tatsache, dass das Schutzelement (8) verschiebbar mit dem Stützelement (11) verbunden ist.

5. Maschine (1) nach Anspruch 4, **gekennzeichnet durch** die Tatsache, dass das Schutzelement (8) mindestens ein Führungselement (13) umfasst, das verschiebbar auf dem Stützelement (11) montiert ist.

6. Maschine (1) nach Anspruch 5, **gekennzeichnet durch** die Tatsache, dass das Führungselement (13) die Stoppfläche (10) definiert.

7. Maschine (1) nach einem oder mehreren der vorhergehenden Ansprüche, **gekennzeichnet durch** die Tatsache, dass das Schutzelement (8) mindestens ein Paar von Seitenwänden (14) umfasst, die auf gegenüberliegenden Seiten der Erfassungsvorrichtung (7) angeordnet und zwischen der Anschlagfläche (9) und der Stoppfläche (10) platziert sind.

## Revendications

1. Machine (1) pour usinage mécanique, comprenant :
- une structure d'appui (2) qui possède au moins une surface de repos (3) sur laquelle au moins un objet destiné à être usiné peut être positionné ;
- au moins un outil (4) associé mobile à ladite structure d'appui (2), pour se rapprocher/s'éloigner de ladite surface de repos (3), entre ledit outil (4) et ladite surface de repos (3) étant définie une forme de zone de travail (5) ;
- des moyens de sécurité (6) comprenant un dispositif de détection (7) pour détecter la présence d'un opérateur dans ladite zone de travail (5), ledit dispositif de détection (7) étant adapté pour émettre un faisceau de lumière et verrouillé conjointement avec ledit outil (4) ; dans laquelle lesdits moyens de sécurité (6) comprennent au moins un élément de protection (8) associé, de manière coulissante, audit dispositif de détection (7) et définissant au moins une surface de butée (9) agencée en dessous de celui-ci et mobile entre au moins une configuration inactive, dans laquelle il est espacé dudit dispositif de détection (7), et au moins une configuration active, dans laquelle il est levé par rapport à la configuration inactive ; dans laquelle
ledit dispositif de détection (7) est adapté pour émettre un faisceau de lumière, lesdits moyens de sécurité (6) étant adaptés pour bloquer le mouvement dudit outil (4) en conséquence de l'interruption du faisceau de lumière émis par ledit dispositif de détection (7), **caractérisée par le fait que** ledit élément de protection (8) comprend au moins un élément barrière (15) adapté pour permettre et interrompre le passage du faisceau de lumière dans ladite configuration inactive et dans le déplacement de la configuration inactive à la configuration active, respectivement.

2. Machine (1) selon la revendication 1, **caractérisée par le fait que** ledit élément de protection (8) définit au moins une surface d'arrêt (10) agencée au-dessus dudit dispositif de détection (7) et adaptée pour entrer en contact avec cette dernière dans la configuration inactive.

3. Machine (1) selon la revendication 1 ou 2, **caractérisée par le fait que** ledit élément barrière (15) s'étend en commençant à partir de ladite surface de butée (9), transversalement à celle-ci.

4. Machine (1) selon une ou plusieurs des revendications précédentes, **caractérisée par le fait que** lesdits moyens de sécurité (6) comprennent au moins un élément de support (11) dudit dispositif de détection (7) et **par le fait que** ledit élément de protection (8) est associé de façon coulissante audit élément de support (11).

5. Machine (1) selon la revendication 4, **caractérisée par le fait que** ledit élément de protection (8) comprend au moins un élément de guidage (13) ajusté de façon coulissante sur ledit élément de support (11).

6. Machine (1) selon la revendication 5, **caractérisée par le fait que** ledit élément de guidage (13) définit ladite surface d'arrêt (10).

7. Machine (1) selon une ou plusieurs des revendications précédentes, **caractérisée par le fait que** ledit élément de protection (8) comprend au moins une paire de parois latérales (14) agencées sur des côtés opposés dudit dispositif de détection (7) et placées entre ladite surface de butée (9) et ladite surface d'arrêt (10).
